(19) **Europäisches Patentamt**

**European Patent Office**

**Office européen des brevets**

(11) **EP 1 202 513 A1**

(12) **DEMANDE DE BREVET EUROPEEN**

(43) Date de publication:
**02.05.2002 Bulletin 2002/18**

(51) Int Cl.7: **H04L 27/00**

(21) Numéro de dépôt: **01402735.3**

(22) Date de dépôt: **22.10.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **26.10.2000 FR 0013748**

(71) Demandeur: **STMicroelectronics S.A.**
**92120 Montrouge (FR)**

(72) Inventeur: **Le van Suu, Maurice**
**75116 Paris (FR)**

(74) Mandataire: **Ballot, Paul**
**Cabinet Ballot**
**122, rue Edouard Vaillant**
**92593 Levallois-Perret Cedex (FR)**

(54) **Modulateur/demodulateur universel**

(57) L'invention concerne un dispositif de modulation/démodulation (10) pouvant fonctionner selon une pluralité de types de modulation utilisant des fréquences porteuses différentes, caractérisé en ce qu'il comprend :

- un modulateur (12) qui module (46-48) au moins un signal par un signal de durée déterminée représentatif d'une information binaire fournie par un microprocesseur (30),
- un démodulateur (16) qui démodule les signaux modulés en provenance d'un site distant en :

- déterminant (18, 20, 22, 24) le type de modulation (MA, MB, MC, MD) des signaux reçus et leur(s) fréquence(s) porteuse(s) (F1, F0),
- fournissant (28) des signaux d'analyse des signaux reçus selon le type de modulation déterminé, et
- détectant les signaux de durée déterminée représentatifs d'informations binaires pour les mettre à disposition du microprocesseur (30).

Fig. 1

## Description

L'invention concerne les dispositifs de modulation/démodulation qui sont destinés à moduler un signal électrique haute fréquence de manière à transmettre des informations à un dispositif éloigné et à démoduler, dans ce dernier, les signaux électriques modulés pour en extraire les informations transmises.

Elle concerne plus particulièrement les dispositifs de modulation/démodulation qui sont utilisés dans le domaine de la domotique ou dans le domaine du comptage d'énergie pour effectuer des relevés de compteurs d'électricité à distance, modifier le tarif de facturation de l'électricité, commander la mise en marche ou l'arrêt d'appareils d'équipement ménagers, etc.

Il existe actuellement de nombreux procédés de modulation d'un signal électrique haute fréquence qui sont utilisés dans les domaines de la domotique et du comptage d'énergie, tels que la modulation d'amplitude AM, la modulation connue sous l'acronyme "SFSK" pour l'expression anglo-saxonne "Spread Frequency Shift Keying", la modulation connue sous l'acronyme "FSK" pour l'expression anglo-saxonne "Frequency Shift Keying".

Par ailleurs, les informations qui sont transmises sont codées selon différents protocoles qui déterminent le format des messages à transmettre, chaque message étant composé de signaux binaires qui servent à commander le modulateur à l'émission. A la réception, le démodulateur détecte les signaux modulés à haute fréquence et extrait les informations binaires du message transmis, signaux binaires qui sont interprétés ensuite par un dispositif approprié, tel qu'un microprocesseur, en fonction du protocole.

Dû au fait que les appareils d'un système domotique sont susceptibles de recevoir des messages et d'en émettre, ces appareils sont équipés chacun d'un dispositif de modulation/démodulation.

Les appareils d'un système domotique sont prévus pour fonctionner selon un type de modulation de sorte qu'ils ne peuvent pas être utilisés dans un autre système domotique mettant en oeuvre un autre type de modulation.

Aussi, l'invention a pour but de réaliser un dispositif de modulation/démodulation qui peut fonctionner selon différents types de modulation.

L'invention concerne donc un dispositif de modulation/démodulation pouvant fonctionner selon une pluralité de types de modulation utilisant des fréquences porteuses différentes, caractérisé en ce qu'il comprend :

- un modulateur qui module, selon le type modulation, au moins un signal à une fréquence porteuse par un signal de durée déterminée représentatif d'une information binaire fournie par un microprocesseur,
  ledit signal modulé étant appliqué à un dispositif d'émission/réception pour en effectuer la transmission à un site distant,

- un démodulateur qui reçoit les signaux modulés en provenance d'un site distant par l'intermédiaire du dispositif d'émission/réception et qui les démodule en
- déterminant le type de modulation des signaux reçus et leur(s) fréquence(s) porteuse(s),
- fournissant des signaux d'analyse des signaux reçus selon le type de modulation déterminé, et
- détectant les signaux de durée déterminée représentatifs d'informations binaires pour les mettre à disposition du microprocesseur.

D'autres caractéristiques et avantages de la présente invention apparaîtront à la lecture de la description suivante d'un exemple particulier de réalisation, ladite description étant faite en relation avec les dessins joints dans lesquels :

- la figure 1 est un schéma fonctionnel d'un dispositif de modulation/démodulation selon l'invention qui est connecté, d'un côté, à un microprocesseur de codage/décodage des messages et de l'autre côté, à un dispositif d'émission/réception de signaux électriques modulés,
- la figure 2 est un schéma fonctionnel détaillé de la partie modulateur du dispositif de modulation/démodulation selon l'invention,
- la figure 3 est un schéma fonctionnel détaillé d'une première partie du démodulateur comprenant un circuit de contrôle de gain,
- la figure 4 est un schéma d'un dispositif de sélection des signaux reçus,
- la figure 5 est un schéma d'un circuit d'analyse du signal sélectionné, et
- les figures 6a, 6b et 6c sont des diagrammes de signaux.

L'invention sera décrite dans son application à des types connus de modulation et de protocoles tels que ceux connus sous les vocables :

- EURIDIS, fonctionnant en modulation d'amplitude à une fréquence porteuse de 50 KHz (mode ou signal MA),
- P.LAN, acronyme de l'expression anglo-saxonne "Power Line Area Network" fonctionnant en modulation de fréquence entre 60 KHz et 90 KHz, dans le domaine des relevés de compteurs (mode ou signal MB),
- EHS, acronyme de l'expression anglo-saxonne "European Home System", fonctionnant en modulation de fréquence entre 60 KHz et 90 KHz, dans le domaine des relevés de compteurs (mode ou signal MB),
- EHS, analogue au précédent mais fonctionnant à 132,5 KHz dans le domaine des commandes automatiques en domotique (mode ou signal MC),

- RRC, acronyme de l'expression anglo-saxonne "Ripple Remote Control", fonctionnant en modulation d'amplitude à une fréquence porteuse de 175 Hz (mode ou signal MD).

L'invention s'applique également à tous autres modes de modulation, qu'il s'agisse d'une modulation d'amplitude ou d'une modulation de fréquence ou modulation de fréquence multiplexe ou par saut de fréquence dans le domaine de cryptage d'information (transmission sécurisée).

Le dispositif de modulation/démodulation 10 ou plus succinctement le modulateur/démodulateur 10 comprend

- un modulateur 12 qui module un signal à la fréquence porteuse selon le mode de modulation choisi de manière à fournir des signaux modulés. Ces signaux modulés sont appliqués à un dispositif d'émission/réception 14 qui en effectue la transmission vers un site distant, et
- un démodulateur 16 qui reçoit les signaux modulés en provenance d'un site distant par l'intermédiaire du dispositif d'émission/réception 14.

Le démodulateur 16 comprend essentiellement :

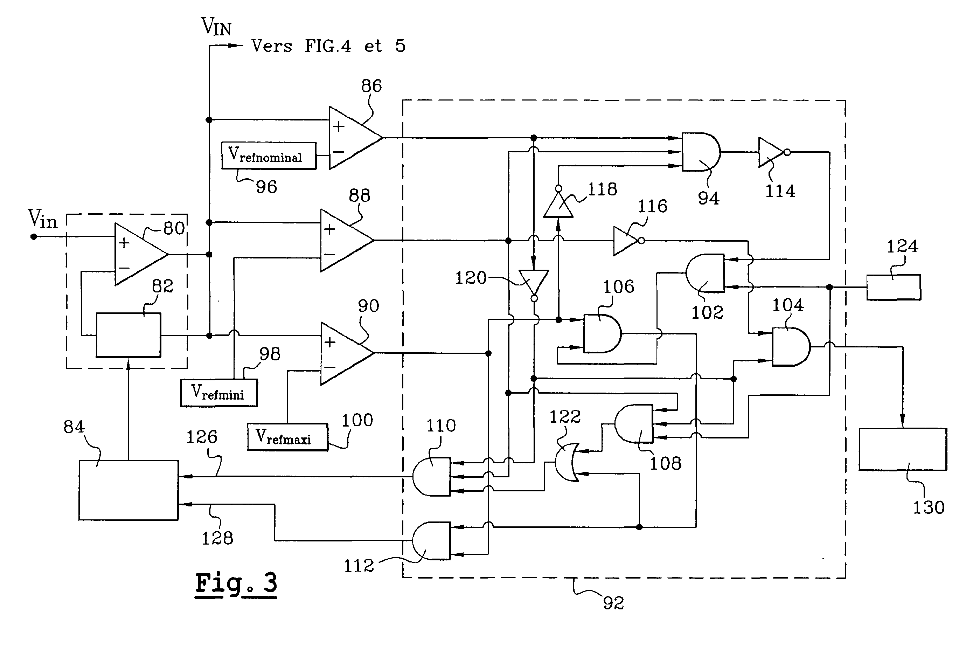

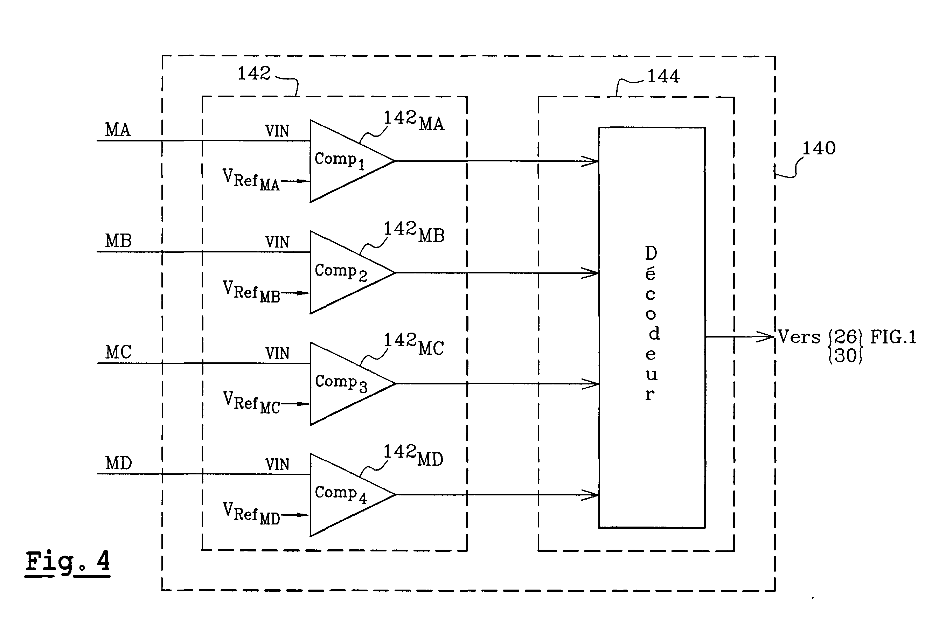

- une batterie de filtres passe-bande 18 centrés chacun sur les fréquences porteuses des signaux modulés à laquelle sont appliqués les signaux reçus et détectés par le dispositif d'émission/réception 14,
- une batterie d'amplificateurs opérationnels 20, un par filtre passe-bande, chaque amplificateur opérationnel étant contrôlé en gain par un circuit de contrôle de gain,
- une batterie de comparateurs de tension 22, un par filtre passe-bande, pour déterminer les signaux modulés qui dépassent un certain seuil déterminé (figure 4),
- un circuit de codage 24 dont le code de sortie identifie le signal reçu MA, MB, MC ou MD,
- un circuit de démultiplexage 26 des signaux reçus qui sélectionne parmi les signaux reçus MA, MB, MC ou MD celui qui doit être démodulé, et
- un circuit d'analyse 28 du signal sélectionné MA, MB, MC ou MD pour extraire les données contenues dans le signal modulé.

A l'émission, les données à transmettre sont fournies au modulateur 12 par un microprocesseur 30, le microprocesseur indiquant aussi le type de modulation à appliquer. A la réception, les données extraites du signal modulé reçu sont fournies au microprocesseur 30 qui en effectue le décodage en fonction du signal reçu MA, MB, MC ou MD et du protocole de transmission.

Le microprocesseur fournit à l'ensemble des circuits du modulateur/démodulateur selon l'invention un signal d'horloge CLK, par exemple des impulsions à la fréquence de huit mégahertz. C'est à partir de ce signal horloge CLK que le modulateur 12 élabore les signaux modulés et que le circuit d'analyse 28 du démodulateur extrait les données dans les signaux modulés.

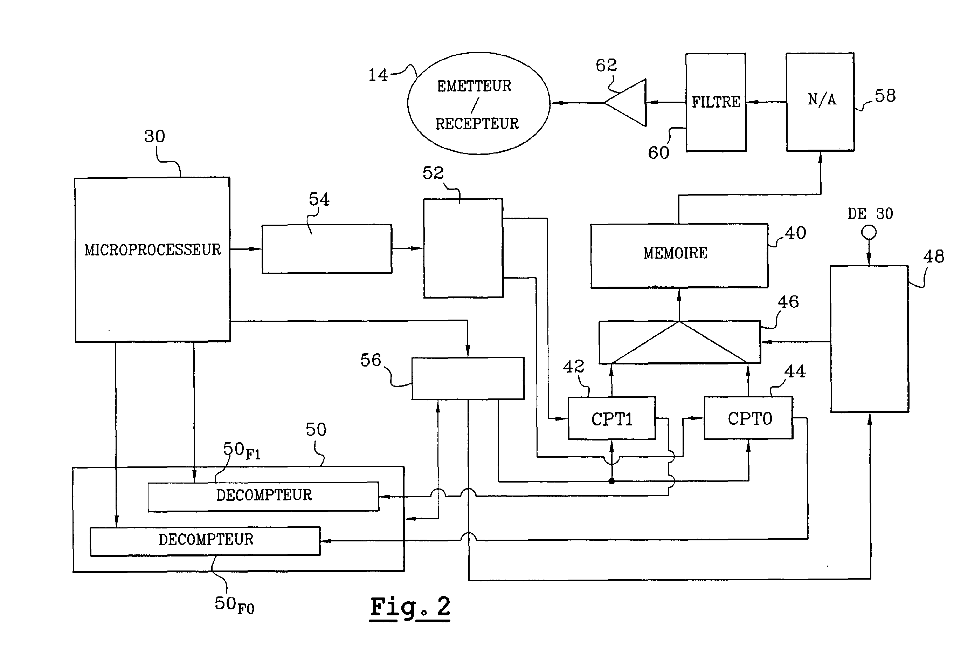

Le modulateur 12 (figure 2) génère un signal sinusoïdal correspondant à chaque fréquence porteuse, la durée des signaux à chaque fréquence porteuse étant déterminée par le nombre de sinusoïdes à la fréquence porteuse. Pour générer ce signal sinusoïdal à la fréquence porteuse, le modulateur utilise une mémoire 40 dans laquelle sont enregistrés les codes représentatifs de la valeur des échantillons d'un signal sinusoïdal : c'est la vitesse de lecture de cette mémoire qui détermine la fréquence du signal sinusoïdal qui sera obtenu. Le nombre d'échantillons par sinusoïde est égal à R.

A cet effet, il est rappelé que dans le mode FSK, à la vitesse du 1200 bauds, un chiffre binaire "1" est par exemple représenté par un signal à la fréquence $F1 = 71,4$ KHz tandis qu'un chiffre binaire "0" est représenté par un signal à la fréquence $F0 = 72,6$ KHz, soit une fréquence centrale de 72 KHz et une période moyenne de 13,88 microsecondes.

Par ailleurs, une vitesse de 1200 bauds correspond à une période de 833 microsecondes, soit environ 60 périodes à la fréquence de 72 KHz. Dans le cas où un bit occupe au maximum la moitié de la période, sa durée sera au maximum de 30 périodes du signal à 72 KHz.

Le modulateur 12 selon l'invention comprend :

- la mémoire 40, qui est du type à lecture seulement, plus connue sous l'acronyme ROM pour l'expression anglo-saxonne "Read Only Memory". Le nombre d'échantillons par sinusoïde sera par exemple de 25, soit une fréquence de lecture de 1,815 MHz pour la fréquence $F0 = 72,6$ KHz,
- deux compteurs 42 (ou CPT1) et 44 (ou CPT0) qui déroulent les adresses de la mémoire 40 pour lire les codes représentatifs des échantillons de chaque sinusoïde,
- un circuit de multiplexage 46 pour sélectionner soit les adresses fournies par le compteur CPT1, soit celles fournies par le compteur CPT0,
- un circuit de commande 48 du circuit de multiplexage en fonction du chiffre binaire "1" ou "0" à transmettre,
- un circuit de comptage 50 du nombre N d'impulsions à la fréquence F1 et du nombre M d'impulsion à la fréquence F0 ; ce comptage est en fait effectué par un décomptage à l'aide de deux décompteurs, l'un $50_{F1}$ pour le nombre N et l'autre $50_{F0}$ pour le nombre M, les nombres N et M étant chargés par le microprocesseur 30,
- un circuit horloge 52 qui fournit les impulsions de déroulement des compteurs 42 et 44 pour obtenir les fréquences F1 ou F0, c'est-à-dire la vitesse de lecture des codes représentatifs des échantillons,

- un circuit de programmation 54 du circuit horloge 52 qui est chargé par le microprocesseur 30 en fonction des fréquences F1 et F0,
- un circuit de sélection 56 du type de modulation AM, FSK ou SFSK,
- un convertisseur numérique/analogique 58 des codes fournis par la mémoire 40,
- un filtre passe-bande 60 pour éliminer les signaux aux fréquences indésirables, et
- un amplificateur opérationnel 62 pour amplifier les signaux modulés et les appliquer à l'émetteur/récepteur 14.

Le fonctionnement du modulateur de la figure 2 est alors le suivant :

Pour un certain type de signal modulé à obtenir, le microprocesseur 30 charge le circuit de programmation 54, les décompteurs $50_{F1}$ et $50_{F0}$ par les nombres N et M et le circuit de sélection de modulation 56.

Le circuit horloge 52 fournit les impulsions de déroulement des compteurs CPT1 et CPT0 pour obtenir les signaux sinusoïdaux haute fréquence F1 et F0. Le choix entre les adresses fournies par le compteur CPT1 ou par le compteur CPT0 est effectué par le circuit de multiplexage 46 en fonction du chiffre binaire à transmettre fourni par le circuit de commande 48. Le nombre N de sinusoïdes à la fréquence F1 pour un chiffre binaire "1" est décompté par le décompteur $50_{F1}$ tandis que le nombre M de sinusoïdes à la fréquence F0 pour un chiffre binaire "0" est décompté par le décompteur $50_{F0}$. Chaque décompteur est décrémenté de "1" chaque fois que le compteur correspondant CPT1 ou CPT0 a fait un tour complet.

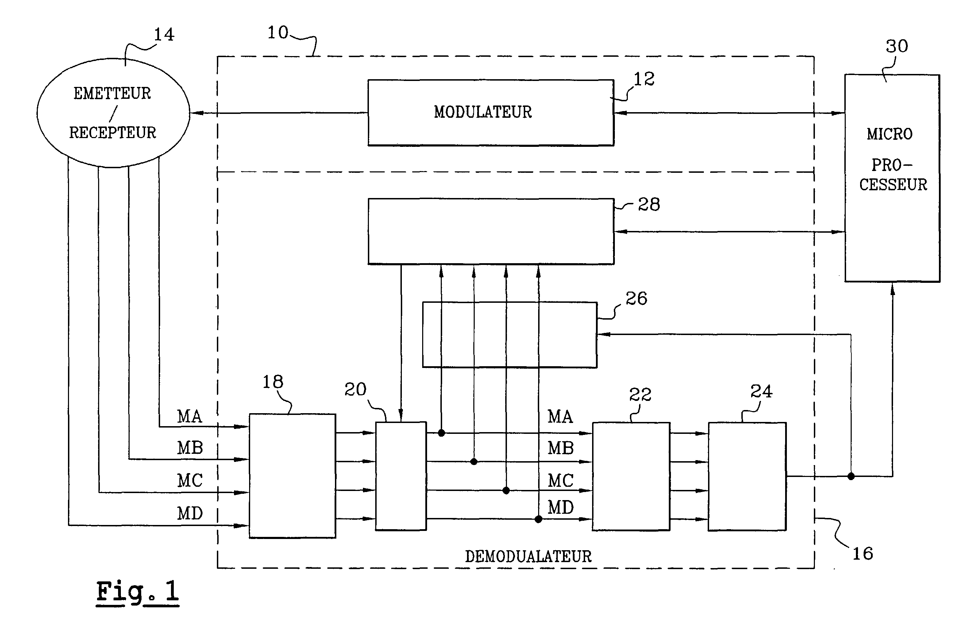

Comme cela a été décrit en relation avec la figure 1, les signaux fournis par le récepteur du dispositif d'émission/réception 14 sont appliqués à une batterie de filtres passe-bande 18 qui sont prévus pour filtrer chacun une certaine bande de fréquences correspondant chacune à celle d'un signal modulé susceptible d'être reçu par hypothèse.

Chaque signal Vin sortant d'un filtre passe-bande de la batterie 18 est appliqué à un amplificateur opérationnel 80 dont le gain est contrôlé à l'aide d'un réseau résistif 82 constitué de résistances commutées de manière à modifier l'effet de contre-réaction et donc le gain de l'amplificateur opérationnel 80. La commutation des résistances du réseau est obtenue par un compteur/décompteur 84 dont la valeur affichée varie en fonction de l'amplitude du signal VIN par rapport à trois seuils de référence Vrefnominal, Vrefmaxi et Vrefmini.

A cet effet, la borne de sortie de l'amplificateur opérationnel 80, qui fournit un signal amplifié VIN, est connectée à une des deux bornes d'entrée de trois comparateurs 86, 88 et 90, l'autre borne d'entrée étant connectée à des sources de tension 96, 98 et 100 fournissant respectivement les valeurs des seuils de référence Vrefnominal, Vrefmini et Vrefmaxi.

Les bornes de sortie des comparateurs 86, 88 et 90 sont connectées à un dispositif logique 92 qui a pour but :

- de diminuer la valeur du compteur/décompteur 84 lorsque VIN est supérieure à Vrefmaxi de manière à diminuer le gain,
- d'augmenter la valeur du compteur/décompteur 84 lorsque VIN est supérieure à Vrefmini mais inférieure à Vrefnomimal de manière à augmenter le gain,
- de ne pas modifier la valeur du compteur/décompteur lorsque VIN est supérieure à Vrefnominal mais inférieure à Vrefmax et donc de ne pas modifier le gain.

Le dispositif logique 92 comprend les circuits "ET" 94, 102 à 112, les circuits inverseurs 114 à 120 et un circuit "OU" 122.

Le circuit ET 94 comprend trois bornes d'entrée qui sont connectées respectivement à la borne de sortie du comparateur 86, à la borne de sortie du comparateur 88 et à la borne de sortie du comparateur 90 par l'intermédiaire du circuit inverseur 118.

La borne de sortie du circuit ET 94 est connectée à une des deux bornes d'entrée du circuit ET 102 via le circuit inverseur 114 ; l'autre borne d'entrée du circuit ET 102 est connectée à une borne 124 qui fournit un signal d'horloge de fréquence adéquate.

La borne de sortie du circuit ET 102 est connectée à une des deux bornes d'entrée du circuit ET 106 dont l'autre borne d'entrée est connectée à la borne de sortie du comparateur 90.

Cette borne de sortie du comparateur 90 est également connectée à une des deux bornes d'entrée du circuit ET 112 dont l'autre borne d'entrée est connectée, d'une part, à la borne de sortie du circuit ET 106 et, d'autre part, à une des deux bornes d'entrée du circuit OU 122. L'autre borne d'entrée du circuit OU 122 est connectée à la borne de sortie du circuit ET 108.

Le circuit ET 108 comprend trois bornes d'entrée qui sont connectées respectivement à la borne horloge 124, à la borne de sortie du comparateur 88 et à la borne de sortie du comparateur 86 via le circuit inverseur 120.

La borne de sortie du circuit inverseur 120 est également connectée à l'une des trois bornes d'entrée du circuit ET 110 et à l'une des deux bornes d'entrée du circuit ET 104.

La borne de sortie du circuit ET 110 est connectée à la borne d'entrée de comptage 126 du compteur/décompteur 84 tandis que la borne de sortie du circuit ET 112 est connectée à la borne d'entrée de décomptage 128 du compteur/décompteur 84.

La deuxième borne d'entrée du circuit ET 104 est connectée à la borne de sortie du comparateur 88 via un circuit inverseur 116 et la borne de sortie est connectée à une borne 126 indiquant que le signal reçu a une amplitude VIN qui est inférieure à Vrefmini.

Le fonctionnement du dispositif de la figure 3 est le suivant. Dans le cas où VIN est supérieure à Vrefnominal et à Vrefmini mais inférieur à Vrefmaxi, les bornes de sortie des comparateurs 86, 88 et 90 sont respectivement aux états "1", "1" et "0" et par le jeu des combinaisons logiques, les circuits ET 110 et 112 sont bloqués de sorte que le compteur/décompteur 84 ne change pas de position.

Dans le cas où VIN est inférieur à Vrefnominal mais supérieur à Vrefmini, les bornes de sortie des comparateurs 86, 88 et 90 sont respectivement aux états "0", "1" et "0" et par le jeu des combinaisons logiques, le circuit ET 110 est ouvert et laisse passer les impulsions d'horloge fournies par la borne 124. Ces impulsions sont alors appliquées à l'entrée de comptage 126 du compteur/décompteur 84 dont la valeur augmente, ce qui augmente le gain de l'amplificateur 80 via le réseau de résistances 82.

Dans le cas où VIN est supérieur à Vrefnominal, Vrefmini et Vrefmaxi, les bornes de sortie des comparateurs 86, 88 et 90 sont toute à l'état "1" et par le jeu des combinaisons logiques, le circuit ET 112 est ouvert pour laisser passer les impulsions fournies par la borne d'horloge 124 . Ces impulsions sont appliquées à l'entrée de décomptage 128 du compteur/décompteur 84 dont la valeur diminue, ce qui diminue le gain de l'amplificateur 80 via le réseau de résistances 82.

Dans le cas où VIN est inférieur à Vrefnominal, Vrefmini et Vrefmaxi, les bornes de sortie des comparateurs 86, 88 et 90 sont toutes à l'état "0" et par le jeu des combinaisons logiques la borne de sortie du circuit ET 104 est à l'état "1", ce qui donne un signal sur la borne de sortie 130 qui est interprété comme un signal reçu qui n'est pas correct.

Le signal VIN de chaque voie de réception MA, MB, MC et MD, après filtrage (18) et amplification (20), est appliqué à un circuit démultiplexage 26 et à un circuit de détection 140 de la voie reçue dont le signal de sortie commande le circuit de démultiplexage 26. Le circuit de détection 140 comprend quatre comparateurs $142_{MA}$, $142_{MB}$, $142_{MC}$, $142_{MD}$ et un circuit de codage 144 des états de sortie des comparateurs 142.

Dans chaque comparateur, le signal VIN correspondant au signal reçu sur la voie est comparé à un seuil VrefMA, VrefMB, VrefMC et MrefMD. Si l'un des signaux VIN est supérieur au seuil, la borne de sortie du comparateur correspondant passe à l'état "1" alors que les bornes de sortie des autres comparateurs restent à l'état "0". Ces états "1" et "0" sont codés dans le circuit de codage 144 qui fournit un code à deux chiffres appliqué au circuit de démultiplexage 26 pour choisir la voie qui a donné un état "1" à la sortie de l'un des comparateurs 142. Ce code est également appliqué au microprocesseur 30 pour lui indiquer l'identité MA, MB, MC ou MD de la voie qui est reçue.

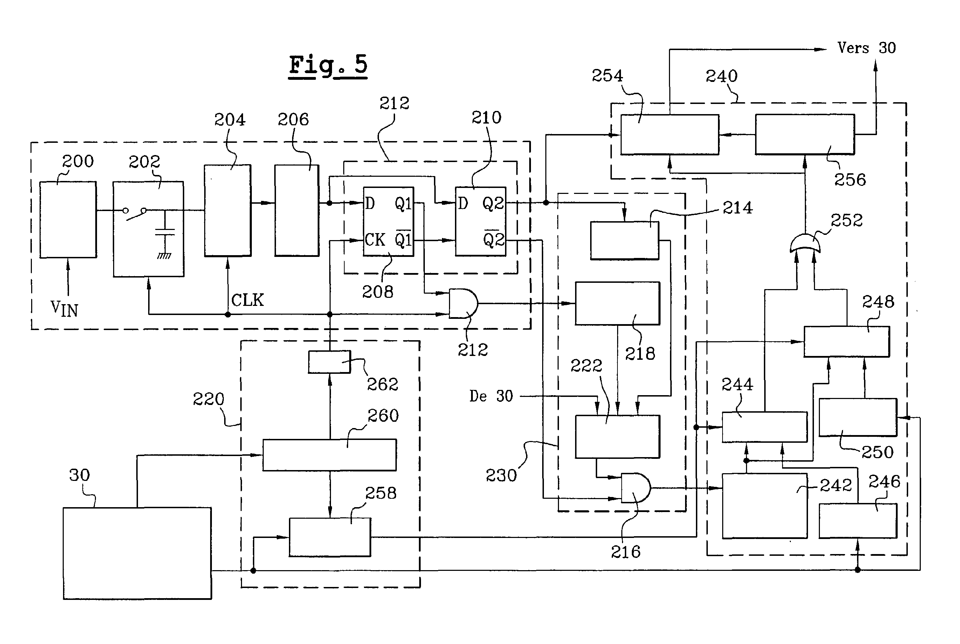

La figure 5 est le schéma du circuit de démodulation 28 du schéma de la figure 1. Ce circuit de démodulation reçoit, via le circuit de démultiplexage 26, le signal de sortie de l'un des amplificateurs opérationnels 80 que l'on appelle VIN alors que le signal d'entrée de l'amplificateur est référencé Vin.

Le circuit de démodulation est basé sur la mesure du nombre N ou M de sinusoïdes de la fréquence porteuse F1 ou F0 contenues dans un chiffre binaire ou bit "1" ou "0", les nombres N et M étant donnés par le microprocesseur 30 du fait de sa connaissance de la voie MA, MB, MC ou MD en cours de réception. Il indique également la valeur de la fréquence des signaux d'horloge à utiliser.

Le circuit de démodulation comprend (figure 5) :

-    un circuit horloge 220 qui fournit un signal impulsionnel dont la fréquence est déterminée en fonction de la voie reçue MA, MO, MC ou MD ; ce circuit horloge comprend un registre de programmation 260 qui est chargé par le microprocesseur 30 et qui fournit les différents signaux d'horloge et, notamment, à un circuit 262 pour obtenir le signal CLK d'échantillonnage et à un compteur 258 qui est chargé par le microprocesseur 30 avec le nombre de bits de la trame à recevoir,

-    un circuit 200 de translation du signal VIN pour qu'il varie de part et d'autre de la valeur zéro,

-    un échantillonneur/bloqueur 202 pour échantillonner le signal VIN, qui est commandé par le signal d'horloge CLK fourni par le circuit 220,

-    un convertisseur Analogique/Numérique 204 qui code les échantillons fournis par l'échantillonneur/bloqueur 202,

-    un comparateur numérique 206, code d'échantillon par code d'échantillon, du code représentatif de l'amplitude de l'échantillon à un code représentatif d'une tension de référence Vrefn,

-    un circuit de détection 212 du passage à zéro du signal VIN qui comprend deux bascules 208 et 210, ce qui permet de détecter la demi-période et la période du signal à la fréquence porteuse F1 et/ou F0,

-    un circuit de validation 230 de la période de la sinusoïde du signal à la fréquence porteuse par comptage du nombre d'échantillons, et

-    un circuit de détection 240 des bits "1" ou "0" par comptage du nombre N ou M de sinusoïdes.

Le circuit de détection 212 de passage à zéro comprend deux bascules 208 et 210 de type D. La borne d'entrée D de la bascule 208 est connectée à la borne de sortie du comparateur numérique 206 et à la borne d'entrée D de la bascule 210. La borne d'entrée horloge de la bascule 208 reçoit le signal d'horloge correspondant à la fréquence d'échantillonnage de sorte qu'elle change d'état au front avant de cette impulsion si la borne d'entrée D a changé d'état. La borne de sortie Q1 de la bascule 208 est connectée à une des deux bornes d'entrée d'un circuit ET 212 dont l'autre borne d'entrée reçoit le signal horloge d'échantillonnage CLK. L'autre borne de sortie $\overline{Q1}$ de la bascule 208 est connectée à la borne d'entrée d'horloge de la bascule 210. La borne de sortie Q2 de la bascule 210 est connectée à une borne d'entrée d'un compteur 214 qui compte les échantillons dits "mauvais", c'est-à-dire ceux qui ne correspondent pas à une demi-sinusoïde du signal à la fréquence porteuse.

La deuxième borne de sortie $\overline{Q2}$ qui correspond à une période dite "bonne" du signal porteur est connectée à une des deux bornes d'entrée d'un circuit ET 216 du circuit de validation 230.

Ce circuit de validation 230 comprend :

- le compteur 214 des "mauvais" échantillons,
- un compteur 218 des "bons" échantillons dont la borne d'entrée est connectée à la borne de sortie du circuit ET 212,
- un comparateur numérique 222 entre le contenu du compteur 218 et le nombre N d'échantillons attendus par sinusoïde du signal à la fréquence porteuse, le nombre N étant fourni par le microprocesseur 30, et
- le circuit ET 216 qui reçoit sur sa deuxième borne d'entrée le signal d'état "1" du résultat positif de la comparaison ; il fournit sur sa borne de sortie un signal de validation de la période du signal à la fréquence porteuse reçu qui est appliqué au circuit de détection 240.

Ce circuit de détection 240 comprend :

- un compteur 242 du nombre P de périodes du signal porteur, que ce nombre corresponde au bit "1" ou au bit "0",
- un premier comparateur numérique 244 qui compare le nombre P au nombre N de périodes correspondant à la voie en cours de réception pour un bit "1", ce nombre N étant donné par le microprocesseur 30 et enregistré dans un registre 246,
- un deuxième comparateur numérique 248 qui compare le nombre P au nombre M de périodes correspondant à la voie en cours de réception pour un bit "0", ce nombre M étant donné par la microprocesseur 30 et enregistré dans un registre 250,
- un circuit OU 252 dont une des deux bornes d'entrée reçoit le signal de bit "1" du comparateur 244 et dont l'autre borne d'entrée reçoit le signal de bit "0" du comparateur 248, et
- un registre à décalage 256 qui enregistre les signaux de bit "1" et "0" détectés par les comparateurs 244 et 248, via la circuit OU 252, et
- un registre à décalage 254 qui enregistre également les signaux de bit "1" et "0" détectés par les comparateurs 244 et 248 et qui reçoit le signal de la sortie Q2 de la bascule 210 qui indique la réception ou non de mauvais échantillons pour le bit en cours d'analyse.

Ce sont les contenus des registres 254 et 256 qui sont transférés au microprocesseur 30 pour analyse selon le protocole de communication et, en premier lieu, pour mettre en oeuvre un code correcteur d'erreur en tenant compte de l'état de Q2.

Le fonctionnement du circuit démodulateur selon le schéma de la figure 5 est le suivant :

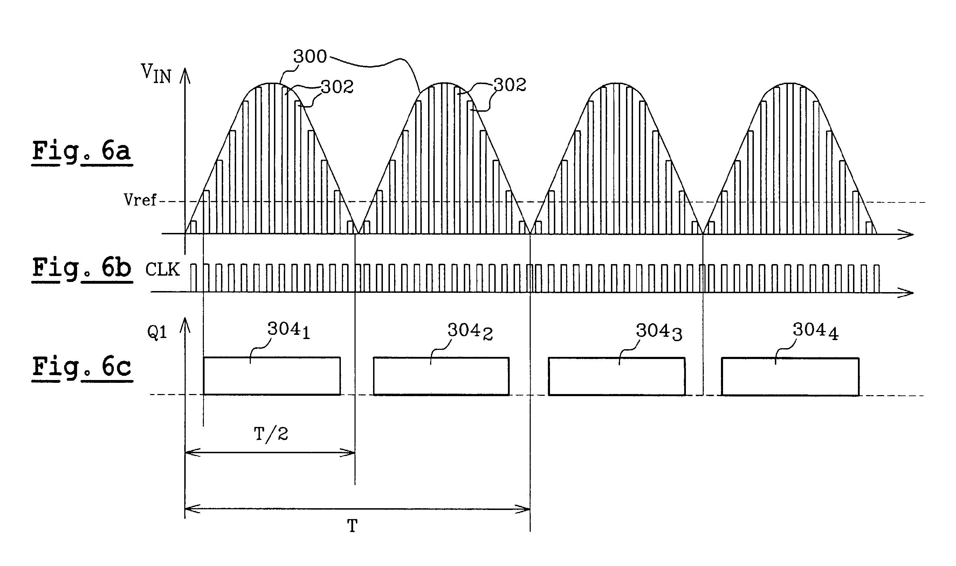

Le signal VIN après translation et redressement dans le circuit 200 a la forme de l'enveloppe 300 du diagramme de la figure 6a. Il est échantillonné dans le circuit 202 pour obtenir les échantillons 302 en synchronisme avec les impulsions d'horloge CLK (figure 6b).L'amplitude de chaque échantillon est codé et le code correspondant est comparé dans le comparateur 206 à un code représentatif d'une tension de référence Vref.

La bascule 208 est à l'état "1" tant que VIN > Vref comme le montre le diagramme de la figure 6c qui représente le signal sur la borne de sortie Q1 ($304_1$, $304_2$, $304_3$ et $304_4$). Les intervalles entre les signaux $304_1$ à $304_4$ représentent les durées pendant lesquelles VIN $\leq V_{ref}$.

Lorsque la bascule 208 est à l'état "1", le circuit ET 212 est ouvert et laisse passer les impulsions CLK qui sont comptées par le compteur 218. Lorsque le circuit ET 212 se ferme, le contenu du compteur 218 est comparé dans le comparateur 222 au nombre P attendu du fait de la connaissance de la voie en cours de réception.

En cas d'égalité, le circuit ET 216 s'ouvre de sorte que le comparateur 242 est incrémenté d'une unité pour indiquer qu'une sinusoïde du signal à la fréquence porteuse a été détectée.

Ce compteur 242 est incrémenté d'une unité chaque fois qu'une sinusoïde du signal à la fréquence porteuse est détecté. Son contenu est comparé à la valeur N indiquant la présence d'un bit "1" et à la valeur M indiquant la présence d'un bit "0" dans les comparateurs respectifs 244 et 248, ces valeurs étant fournies par le microprocesseur 30 du fait de sa connaissance de la voie en cours de réception. Cette comparaison est effectuée en présence d'un signal en provenance du compteur 258, signal qui indique la position du bit dans la trame en cours de réception.

Si le nombre de sinusoïdes est égal à N, il s'agit d'un bit "1" et il s'agit d'un bit "0" si le nombre de sinusoïdes est égal à M.

Les bits "1" et "0" ainsi détectés sont enregistrés dans le registre à décalage 254 pour être transmis au microprocesseur 30.

Il est prévu que les comparaisons qui sont effectuées permettent une certaine tolérance dans les valeurs de N et M.

L'invention a été décrite en utilisant plusieurs filtres passe-bande et plusieurs amplificateurs opérationnels mais on peut utiliser un seul filtre et un seul amplificateur opérationnel en utilisant des dispositifs dits à commutation de capacités qui permettent de changer la fréquence opérationnelle.

Par ailleurs, l'amplificateur opérationnel peut être connecté entre le multiplexeur 26 et le dispositif 28.

## Revendications

1. Dispositif de modulation/démodulation (10) pouvant fonctionner selon une pluralité de types de modulation utilisant des fréquences porteuses différentes, comprenant:

   - un modulateur (12) qui module (40-46, 58-62), selon le type modulation, au moins un signal à une fréquence porteuse par un signal de durée déterminée représentatif d'une information binaire fournie par un microprocesseur (30), ledit signal modulé étant appliqué à un dispositif d'émission/réception (14) pour en effectuer la transmission à un site distant,
   - un démodulateur (16) qui reçoit les signaux modulés en provenance d'un site distant par l'intermédiaire du dispositif d'émission/réception (14) et qui les démodule en
   - déterminant (18, 20, 22, 24) le type de modulation (MA, MB, MC, MD) des signaux reçus et leur (s) fréquence(s) porteuse(s) (F1, F0),
   - fournissant (220) des signaux d'analyse des signaux reçus selon le type de modulation déterminé, et
   - détectant les signaux de durée déterminée représentatifs d'informations binaires pour les mettre à disposition du microprocesseur **caractérisé en ce que** le modulateur comprend un générateur d'au moins un signal à une fréquence porteuse (F1, F0), ledit générateur comprenant :
   - une mémoire (40) de type numérique qui contient R codes représentatifs d'une sinusoïde,
   - au moins un compteur d'adressage (CPT1, CTP0) de ladite mémoire (40) qui déroule les adresses successives des R codes représentatifs de la sinusoïde à la fréquence des impulsions d'un signal d'horloge, ladite fréquence des impulsions étant égale à R fois la fréquence porteuse (F1, F0),
   - un convertisseur numérique/analogique (58) des R codes représentatifs pour fournir un signal analogique à la fréquence porteuse (F1, F0), et
   - un filtre passe-bande (60) pour éliminer les signaux aux fréquences autres que la fréquence porteuse (60).

2. Dispositif selon la revendication 1, **caractérisé en ce que** le générateur comprend :

   - deux compteurs d'adressage (CPT1, CPT0) qui déroulent leurs adresses successives à des fréquences différentes, et
   - un circuit d'aiguillage (46) des adresses des deux compteurs d'adressage en fonction de l'information binaire fournie par le microprocesseur 30.

3. Dispositif selon la revendication 1 ou 2, **caractérisé en ce que** le modulateur comprend des moyens (50) pour compter le nombre (N, M) de déroulements d'un compteur d'adressage (CPT1, CPT0) et déterminer ainsi la durée du signal de modulation de la fréquence porteuse (F1, F0).

4. Dispositif selon la revendication 1, 2 ou 3, **caractérisé en ce que** le modulateur comprend, en outre, des moyens (52, 54) pour déterminer la fréquence des impulsions du signal d'horloge appliqué au(x) compteur(s) d'adressage (CPT1, CPT0) en fonction de la fréquence porteuse (F1, F0) et du nombre R d'échantillons par sinusoïde.

5. Dispositif selon l'une quelconque des revendications précédentes, **caractérisé en ce que** les moyens qui permettent au démodulateur de déterminer le type de modulation (MA, MB, MC ou MD) des signaux reçus comprennent :

   - une batterie de filtres passe-bande (18) centrés chacun sur la ou les fréquences porteuses (F1, F0) des types de modulation (MA, MB, MC, MD) et qui fournissent chacun un signal (Vin),
   - une batterie d'amplificateurs opérationnels (20) à contrôle de gain pour amplifier les signaux (Vin) de sortie des filtres passe-bande (18), et qui fournissent chacun un signal de sortie (VIN),
   - une batterie de comparateurs (22) pour comparer chaque signal de sortie (VIN) des amplificateurs (20) à un signal de référence (Vref) et obtenir un signal d'état sur la borne de sortie de chaque comparateur (142), et
   - un circuit de codage 144 des signaux d'états des comparateurs pour déterminer le type de modulation (MA, MB, MC, MD) des signaux reçus.

6. Dispositif selon la revendication 5, **caractérisé en ce qu'**il comprend, en outre, un circuit de sélection (26) de la voie de réception correspondant au signal reçu qui est commandé par le circuit de codage (144).

7. Dispositif selon la revendication 5 ou 6, **caractérisé en ce que** chaque amplificateur opérationnel à contrôle de gain (20) comprend :

   - un amplificateur opérationnel (80) avec un réseau de résistances commutables (82) dans le circuit de contre-réaction pour amplifier le signal (Vin),

- des premier, second et troisième comparateurs (86, 88, 90) pour comparer respectivement le signal (Vin) à trois seuils (Vrefnominal, Vrefmini, Vrefmaxi) et fournir des signaux d'états selon les résultats des comparaisons,
- un bloc logique (92) pour combiner les signaux d'états des comparateurs (86, 88, 90) et fournir des impulsions ou non,
- un compteur/décompteur (84) recevant ou non les impulsions fournies par le bloc logique (92) de manière
- à incrémenter son contenu lorsque le signal (VIN) est supérieur à Vrefmini mais inférieur à Vrefnominal et Vrefmaxi,
- à décrémenter son contenu lorsque le signal (VIN) est supérieur à Vrefmini, Vrefnominal et Vrefmaxi, et
- à ne pas modifier son contenu lorsque le signal (VIN) est supérieur à Vrefmini et Vrefnominal mais inférieur à Vrefmaxi,

ledit compteur/décompteur étant connecté au réseau de résistances commutables pour modifier la résistance de contre-réaction.

8. Dispositif selon l'une quelconque des revendications 1 à 7, **caractérisé en ce que** les moyens pour fournir les signaux d'analyse du signal reçu comprennent un circuit horloge (220) qui génère au moins un signal impulsionnel dont la fréquence est R fois la fréquence porteuse du signal en cours de réception.

9. Dispositif selon la revendication 8, **caractérisé en ce que** les moyens pour détecter les signaux de durée déterminée représentatifs d'informations binaires comprennent :

- des moyens (200, 202, 204) pour échantillonner et coder l'amplitude des échantillons du signal reçu (Vin), en des codes représentatifs,
- des moyens (206, 210 et 230) pour compter les échantillons et déterminer la période du signal reçu,
- des moyens (240) pour compter le nombre de périodes du signal reçu et déterminer s'il s'agit d'un chiffre "1" ou "0", et
- des moyens (254) pour enregistrer la suite des chiffres "1" et "0".

10. Dispositif selon la revendication 9, **caractérisé en ce que** les moyens pour échantillonner et coder l'amplitude des échantillons comprennent :

- un circuit (200) de translation et de redressement du signal reçu,

- un circuit d'échantillonnage (202) du signal translaté et redressé, et
- un convertisseur analogique/numérique (204), pour convertir des codes représentatifs de l'amplitude des échantillons.

11. Dispositif selon la revendication 9 ou 10, **caractérisé en ce que** les moyens (230) pour compter les échantillons comprennent :

- un comparateur (206) pour comparer les codes des échantillons à un code représentatif d'un seuil (Vref) et fournir un signal d'état lorsque l'amplitude de l'échantillon est supérieure au seuil (Vref),
- une bascule (208) pour enregistrer le signal d'état fourni par le comparateur (206),
- un circuit de comptage (212, 218) des échantillons, et
- un comparateur (222) pour comparer le nombre compté d'échantillons avec le nombre attendu et fournir un signal de validation lorsque les nombres sont égaux.

12. Dispositif selon la revendication 9, 10 ou 11, **caractérisé en ce que** les moyens (240) pour compter le nombre de périodes du signal reçu et déterminer s'il s'agit d'un chiffre "1" ou d'un chiffre "0", comprennent :

- un compteur (242) du nombre de périodes du signal reçu,
- un premier comparateur (244) pour comparer le nombre compté au nombre N de périodes pour un chiffre "1" et fournir un signal de validation du chiffre binaire "1" si les deux nombres sont égaux,
- un deuxième comparateur (248) pour comparer le nombre compté au nombre M de périodes pour un chiffre "0" et fournir un signal de validation du chiffre "0" si les deux nombres sont égaux,

13. Dispositif selon l'une quelconque des revendications 5 à 12, **caractérisé en ce que** la batterie de filtres passe-bande est réalisée par un filtre passe-bande du type à capacités commutées pour obtenir les différentes fréquences de fonctionnement.

14. Dispositif selon l'une des revendications 5 à 13, **caractérisé en ce que** la batterie d'amplificateurs opérationnels est réalisée par un amplificateur du type à capacités commutées pour obtenir les différentes fréquences de fonctionnement.

15. Dispositif selon la revendication 14, **caractérisé en ce que** l'amplificateur opérationnel à capacités commutées est connecté à la borne de sortie du cir-

cuit de sélection (26).

Fig. 1

MODULATEUR

MICRO
PRO-
CESSEUR

EMETTEUR
/
RECEPTEUR

DEMODUALATEUR

MA
MB
MC
MD

MA
MB
MC
MD

**Fig. 2**

EMETTEUR / RECEPTEUR — 14

62

FILTRE — 60

N/A — 58

30 — MICROPROCESSEUR

54

52

MEMOIRE — 40

DE 30 — 48

56

46

CPT1 — 42

CPT0 — 44

50

50F1 — DECOMPTEUR

DECOMPTEUR — 50F0

EP 1 202 513 A1

$V_{IN}$

Vers FIG.4 et 5

$V_{in}$

$V_{refnominal}$

$V_{refmini}$

$V_{refmaxi}$

**Fig. 3**

EP 1 202 513 A1

MA

MB

MC

MD

142

142MA

$Comp_1$

VIN

$V_{Ref\,MA}$

142MB

$Comp_2$

VIN

$V_{Ref\,MB}$

142MC

$Comp_3$

VIN

$V_{Ref\,MC}$

142MD

$Comp_4$

VIN

$V_{Ref\,MD}$

140

144

Decodeur

Vers {26} FIG.1
     {30}

**Fig. 4**

**Fig. 5**

Fig. 6a

Fig. 6b

Fig. 6c

Office européen
des brevets

**RAPPORT DE RECHERCHE EUROPEENNE**

Numéro de la demande

EP 01 40 2735

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| Y | US 5 940 438 A (NAKAYAMA HIROYUKI ET AL) 17 août 1999 (1999-08-17) * abrégé * * colonne 1, ligne 17 – ligne 54 * * colonne 2, ligne 25 – ligne 34 * * colonne 3, ligne 34 – ligne 65 * * colonne 4, ligne 9 – ligne 38 * * colonne 7, ligne 17 – ligne 28 * * colonne 7, ligne 38 – ligne 45 * * colonne 7, ligne 57 – colonne 8, ligne 9 * * colonne 8, ligne 14 – ligne 31 * * revendications 1-5,7-11 * | 1,8 | H04L27/00 |
| A | | 2-7,9-15 | |
| Y | EP 0 940 956 A (HEWLETT PACKARD CO) 8 septembre 1999 (1999-09-08) * abrégé * * alinéa '0005! – alinéa '0006! * * alinéa '0010! – alinéa '0012! * * alinéa '0023! – alinéa '0024! * * alinéa '0026! * * alinéa '0032! * * alinéa '0040! – alinéa '0041! * * revendication 1 * | 1 | |
| | | | DOMAINES TECHNIQUES RECHERCHES (Int.Cl.7) |
| | | | H04L |
| A | | 2-4 | |
| Y | US 4 813 058 A (TAKASE AKIHIKO) 14 mars 1989 (1989-03-14) * abrégé * * colonne 2, ligne 5 – ligne 32 * * colonne 2, ligne 56 – colonne 3, ligne 8 * * revendication 1 * | 8 | |
| A | | 9-15 | |
| | -/-- | | |

Le présent rapport a été établi pour toutes les revendications

| Lieu de la recherche | Date d'achèvement de la recherche | Examinateur |
|---|---|---|
| LA HAYE | 14 janvier 2002 | Reilly, D |

EP 1 202 513 A1

**Office européen des brevets**

# RAPPORT DE RECHERCHE EUROPEENNE

Numéro de la demande

EP 01 40 2735

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | US 4 517 519 A (MUKAIYAMA FUMIAKI) 14 mai 1985 (1985-05-14) * abrégé * * colonne 4, ligne 46 - ligne 56 * * colonne 5, ligne 57 - ligne 63 * * colonne 8, ligne 50 - ligne 63 * * colonne 9, ligne 23 - ligne 34 * * colonne 10, ligne 10 - ligne 36 * * revendications 1,2 * | 8-15 | |

DOMAINES TECHNIQUES RECHERCHES (Int.Cl.7)

Le présent rapport a été établi pour toutes les revendications

| Lieu de la recherche | Date d'achèvement de la recherche | Examinateur |
|---|---|---|
| LA HAYE | 14 janvier 2002 | Reilly, D |

**ANNEXE AU RAPPORT DE RECHERCHE EUROPEENNE
RELATIF A LA DEMANDE DE BREVET EUROPEEN NO.**

EP 01 40 2735

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

14-01-2002

| Document brevet cité au rapport de recherche | | Date de publication | Membre(s) de la famille de brevet(s) | | Date de publication |
|---|---|---|---|---|---|
| US 5940438 | A | 17-08-1999 | JP | 10243049 A | 11-09-1998 |
| EP 0940956 | A | 08-09-1999 | US | 5945885 A | 31-08-1999 |
| | | | EP | 0940956 A2 | 08-09-1999 |
| | | | JP | 11331284 A | 30-11-1999 |
| US 4813058 | A | 14-03-1989 | JP | 2804755 B2 | 30-09-1998 |
| | | | JP | 63061536 A | 17-03-1988 |
| | | | DE | 3789793 D1 | 16-06-1994 |
| | | | DE | 3789793 T2 | 25-08-1994 |
| | | | EP | 0258697 A2 | 09-03-1988 |
| US 4517519 | A | 14-05-1985 | JP | 1719760 C | 14-12-1992 |
| | | | JP | 3076060 B | 04-12-1991 |
| | | | JP | 57152259 A | 20-09-1982 |
| | | | JP | 57080851 A | 20-05-1982 |

EPO FORM P0460

Pour tout renseignement concernant cette annexe : voir Journal Officiel de l'Office européen des brevets, No.12/82